# EUROPÄISCHE PATENTANMELDUNG

(11) **EP 3 970 960 A1**
(43) Veröffentlichungstag der Anmeldung: **23.03.2022**
(21) Anmeldenummer: 21194433.5
(22) Anmeldetag: 01.09.2021
(51) Int. Cl.: B32B 3/26, B32B 1/02, B32B 5/02, B32B 27/08, B32B 27/12, B65D 65/40

(54) **HOHLKAMMERPLATTE MIT INNENLIEGENDER VERSTÄRKUNGSLAGE**

(30) Priorität: 16.09.2020 DE 202020105320 U; 23.09.2020 DE 202020105451 U; 20.11.2020 DE 202020106683 U
(71) Anmelder: Wischemann Kunststoff GmbH, 48607 Ochtrup (DE)
(72) Erfinder: WISCHEMANN, Ingo, 48607 Ochtrup (DE)
(74) Vertreter: Habbel, Ludwig

(57) **Zusammenfassung**

Bei einer Hohlkammerplatte (1), mit einer ersten äußeren Decklage (2), und einer zweiten äußeren Decklage (2), und einer zwischen den beiden Decklagen (2) angeordneten Hohlkammerschicht (3), schlägt die Erfindung vor, dass zwischen der Hohlkammerschicht (3) und einer Decklage (2) eine Verstärkungslage (4) angeordnet ist, die eine Gitter- oder Faserstruktur aufweist und ebenfalls Hohlräume enthält.

## Beschreibung

Die Erfindung betrifft eine Hohlkammerplatte nach dem Oberbegriff des Anspruchs 1.

Aus der Praxis sind derartige Hohlkammerplatten bekannt. Sie bieten bei vergleichsweise geringem Eigengewicht eine gute mechanische Stabilität, so dass sie beispielsweise als Wandelemente von Behältern verwendet werden können.

Der Erfindung liegt die Aufgabe zugrunde, eine gattungsgemäße Hohlkammerplatte dahingehend zu verbessern, dass sie eine höhere Durchstoß- und Stoßfestigkeit aufweist.

Diese Aufgabe wird durch eine Hohlkammerplatte nach Anspruch 1 gelöst. Vorteilhafte Ausgestaltungen sind in den Unteransprüchen beschrieben.

Die Erfindung schlägt vor, dass zwischen der Hohlkammerschicht und einer Decklage eine Verstärkungslage angeordnet ist, die eine Gitter- oder Faserstruktur aufweist und ebenfalls Hohlräume enthält. Dadurch erhöht sich die Durchstoß- und Stoßfestigkeit der Platte. Im Unterschied dazu, einfach die Materialstärke einer Decklage zu erhöhen, oder durch die Verwendung von zwei dementsprechenden Schichten - wie z. B. zwei Folien - die Material-Gesamtstärke einer der beiden äußeren Decklagen zu vergrößern, ist erfindungsgemäß vorgesehen, dass die Verstärkungslage eine Gitter- oder Faserstruktur aufweist. Dementsprechend weist sie aufgrund der gitterförmigen oder faserigen Ausgestaltung Hohlräume und ein dementsprechend geringes Flächengewicht auf. Gleichzeitig wird durch die Gitter- oder Faserstruktur auch eine hohe Elastizität der Verstärkungslage erreicht, so dass die vorschlagsgemäße Hohlkammerplatte eine erhöhte Ausreißfestigkeit für Nägel oder Schrauben aufweist. Durch die Gitter- oder Faserstruktur wird mit der Verstärkungslage eine höhere Belastbarkeit der Hohlkammerplatte erreicht.

Beispielsweise kann die Verstärkungslage Naturfasern enthalten, wenn gewünscht ist, den Anteil synthetischen Materials in der Hohlkammerplatte zu verringern oder sogar möglichst gering zu halten. Die Verstärkungslage kann Glas- oder Karbonfasern enthalten, wenn dies aus Gründen der mechanischen Eigenschaften und / oder des Gewichts wünschenswert ist. Die Verstärkungslage kann metallische Fasern oder Drähte enthalten, die über deren mechanische Eigenschaften hinaus auch elektrisch leitende Eigenschaften aufweisen oder die Schaffung eines Behälters mit abschirmender Wirkung ermöglichen, der wie ein Faraday'scher Käfig das Transportgut schützen kann.

Die Hohlkammerplatte ist universell einsetzbar und kann insbesondere dort eingesetzt werden, wo eine besonders hohe Stoßfestigkeit und/oder Schlagfestigkeit gefordert wird, beispielsweise für Großladungsträger, dort z. B. als Wandring, der auf einen Boden wie z. B. eine Palette aufgesetzt wird, um in an sich bekannter Weise einen Faltbehälter zu schaffen, dessen Wandring für Leerfahrten platzsparend zusammengefaltet und auf dem Boden abgelegt werden kann.

In an sich bekannter Weise können die beiden Decklagen und die Hohlkammerschicht aus Kunststoff bestehen, was sich für die erwähnten Wandringe in der Praxis bewährt hat.

Dementsprechend kann in bekannter, vorteilhafter Ausgestaltung vorgesehen sein, dass die Hohlkammerschicht als tiefgezogene Noppenfolie ausgestaltet ist, was geringes Gewicht mit hoher Belastbarkeit und Biegesteifigkeit der Platte kombiniert.

Auch die Verstärkungslage kann vorteilhaft aus Kunststoff bestehen, insbesondere kann sie als Gewebe ausgestaltet sein, wobei sich in ersten Versuchen gute Belastbarkeitswerte der Hohlkammerplatte herausgestellt haben, wenn die Verstärkungslage als Polypropylengewebe ausgestaltet ist.

Insbesondere wenn in der Hohlkammerplatte nur ein einziger Kunststoff verwendet wird, kann die Hohlkammerplatte nach Erreichen ihrer Lebensdauer sortenrein recycliert werden. Beispielsweise kann vorgesehen sein, dass nicht nur die Verstärkungslage, sondern auch die beiden Decklagen und die Hohlkammerschicht jeweils aus einem Polypropylenkunststoff bestehen.

Wenn die Verstärkungslage mit der ihr benachbarten äußeren Decklage und / oder mit der Hohlkammerschicht verpresst oder verschweißt wird, kann erreicht werden, dass das Material aus einer angrenzenden Schicht, also aus der Decklage und / oder aus der Hohlkammerschicht, aufgrund des Pressdrucks, aufgrund einer thermisch hervorgerufenen Erweichung oder aufgrund ähnlicher Einflüsse in die Hohlräume der Verstärkungslage eindringt, so dass die Wandstärke der gesamten Platte nicht entsprechend der Materialstärke der Stärkungslage vergrößert werden muss, wenn die Verstärkungslage ergänzend in eine an sich bekannte Konstruktion einer Hohlkammerplatte eingebracht wird. Die Verwendung der vorschlagsgemäßen Hohlkammerplatte kann daher in vielen Fällen auch dort vorgesehen sein, wo benachbarte Bauteile für das Zusammenwirken mit einer herkömmlichen Hohlkammerplatte ausgelegt sind, so dass dementsprechend diese benachbarten Bauteile nicht neu konstruiert zu werden brauchen.

So wird beispielsweise mit einem minimalen logistischen Aufwand ermöglicht, im laufenden Betrieb vorhandene Hohlkammerplatten durch die vorschlagsgemäß ausgestalteten, verstärkten Hohlkammerplatten zu ersetzen, falls die betrieblichen Anforderungen dies wünschenswert erscheinen lassen. Beispielsweise kann ein Wandring eines Großladungsträgers, der in einer Nut im Boden des Großladungsträgers aufgenommen wird, durch einen mechanisch höher belastbaren, verstärkten Wandring ersetzt werden, dessen Wände durch vorschlagsgemäße Hohlkammerplatten gebildet werden. Dabei entsprechen der Aufbau und die verwendeten Materialien dem bisherigen Wandring, mit Ausnahme der hinzugefügten Verstärkungslage. Der verstärkte Wandring lässt sich problemlos in den weiterhin verwendbaren Boden einstellen, da die Nutbreite auch das verstärkte Hohlkammer-Plattenmaterial aufgrund der kaum veränderten Plattendicke problemlos aufnehmen kann.

In einer Ausgestaltung der Hohlkammerplatte kann vorgesehen sein, dass zwischen den beiden Decklagen mehrere Verstärkungslagen angeordnet sind. Davon ist wenigstens eine vorschlagsgemäß ausgestaltet, indem sie eine Gitter- oder Faserstruktur aufweist und Hohlräume enthält. Beispielsweise kann auf beiden Seiten von der Hohlkammerschicht jeweils eine Verstärkungslage zwischen der Hohlkammerschicht und der jeweiligen äußeren Decklage angeordnet sein, um insgesamt die Belastbarkeit der Hohlkammerplatte zu vergrößern und dabei einen symmetrischen Aufbau der Hohlkammerplatte beizubehalten.

Bei der Verwendung mehrerer Verstärkungslagen kann beispielsweise jedoch auch vorgesehen sein, dass zwischen der Hohlkammerschicht und einer Decklage nicht nur eine, sondern mehrere Verstärkungslagen angeordnet sind, von denen wenigstens eine vorschlagsgemäß ausgestaltet ist und eine Gitter- oder Faserstruktur sowie Hohlräume aufweist. Auf diese Weise kann die Schichtdicke der Verstärkung innerhalb der Hohlkammerplatte dadurch variiert werden, dass nicht unterschiedlich dicke Verstärkungslagen bereitgestellt werden müssen, sondern dass vielmehr ein standardisiertes Material hergestellt wird, welches eine Verstärkungslage mit einer vergleichsweise geringen Schichtdicke bildet, und dass aus diesem Material zwei oder mehr Lagen übereinander angeordnet und ggf. miteinander verbunden werden, um so die gewünschte, an den jeweiligen Einsatzzweck der Hohlkammerplatte angepasste Schichtdicke der Verstärkungslage zu erzielen.

Wenn die Hohlkammerplatte mehr als die eine vorschlagsgemäß ausgestaltete Verstärkungslage aufweist, kann die eine oder können die mehreren zusätzlichen Verstärkungslagen ebenfalls vorschlagsgemäß ausgestaltet sein, indem sie eine Gitter- oder Faserstruktur aufweist und Hohlräume enthält. Sie können jedoch auch abweichend ausgestaltet sein, z. B. als geschlossene, folienartige Schicht, und sie können je nach dem verwendeten Material über die Verstärkungsfunktion hinaus der Hohlkammerplatte weitere Eigenschaften verleihen bzw. Funktionen ermöglichen.

In Kombination der beiden vorgenannten Ausgestaltungen kann vorgesehen sein, dass beiderseits von der Hohlkammerschicht jeweils zwei oder mehr Verstärkungslagen angeordnet sind. Zugunsten einer symmetrischen Ausgestaltung der Hohlkammerplatte kann auf beiden Seiten von der Hohlkammerschicht jeweils die gleiche Anzahl von Verstärkungslagen angeordnet sein. Falls jedoch eine Verstärkung der Hohlkammerplatte nur auf einer Seite erforderlich ist, kann wirtschaftlich vorteilhaft und zugunsten eines möglichst geringen Eigengewichts die Anzahl von Verstärkungslagen auf den beiden Seiten der Hohlkammerschicht unterschiedlich sein, wobei auf einer Seite beispielsweise nur eine einzige Verstärkungslage vorgesehen sein kann.

Ein Ausführungsbeispiel der Erfindung wird anhand der rein schematischen Darstellung nachfolgend näher erläutert. Dabei zeigt
- Fig. 1: einen Querschnitt durch ein Ausführungsbeispiel einer vorschlagsgemäßen Hohlkammerplatte anhand einer symbolhaften, theoretischen Darstellung, und
- Fig. 2: einen Querschnitt durch ein Muster einer Hohlkammerplatte, welches im Aufbau dem Ausführungsbeispiel der Fig. 1 entspricht, und wobei die Hohlkammerplatte teilweise auseinandergezogen dargestellt ist.

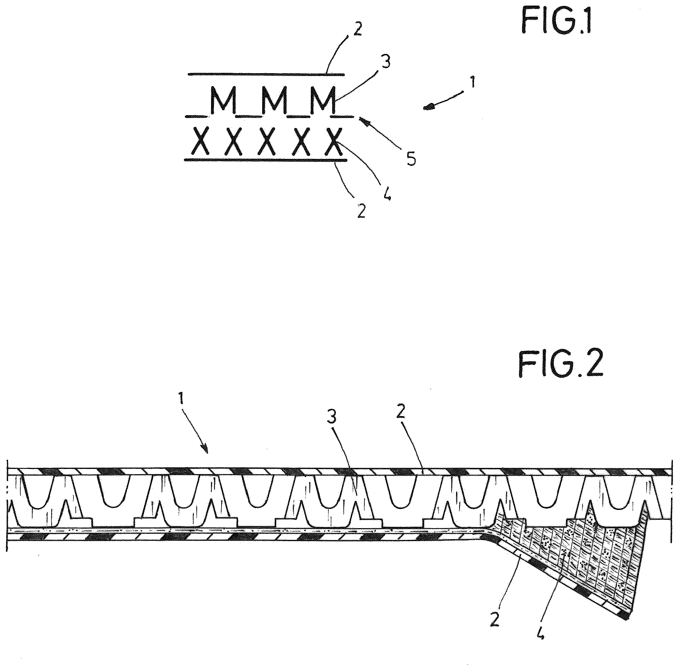

Fig. 1 zeigt schematisch den Aufbau einer vorschlagsgemäßen Hohlkammerplatte 1: Die beiden äußeren, durchgezogenen Linien repräsentieren schematisch zwei äußere Decklagen 2, die beispielsweise jeweils als Kunststofffolie ausgestaltet sind. Zwischen den beiden Decklagen 2 ist eine aus Kunststoff bestehende, tiefgezogene Noppenfolie als Hohlkammerschicht 3 angeordnet, die die Materialstärke der gesamten Hohlkammerplatte wesentlich bestimmt, indem sie beispielsweise 70 % oder mehr der Materialstärke ausmacht. Diese Hohlkammerschicht 3 ist schematisch durch die Buchstaben "M" verdeutlicht.

Zwischen der Hohlkammerschicht 3 und der unteren äußeren Decklage 2 ist, durch die Buchstaben "X" angedeutet, eine Verstärkungslage 4 dargestellt, die beispielsweise als ein Polypropylengewebe ausgestaltet ist.

Eine gestrichelte Linie 5 soll in Art einer Trennlinie rein schematisch verdeutlichen, dass die Hohlkammerschicht 3 und die Verstärkungslage 4 unterschiedlich ausgestaltet sind. Es handelt sich bei dieser gestrichelten Linie 5 nicht notwendigerweise um eine in der Hohlkammerplatte 1 vorhandene Materialschicht, jedoch kann vorgesehen sein, dass die Hohlkammerschicht 3 und die Verstärkungslage 4 miteinander verklebt werden, in welchem Fall die gestrichelte Linie 5 die Klebstoffschicht verdeutlicht.

Fig. 2 zeigt einen Querschnitt durch ein als praktisches Muster hergestelltes Ausführungsbeispiel einer vorschlagsgemäßen Hohlkammerplatte1 , wobei rechts im Bild die untere äußere Decklage 2 zusammen mit der Verstärkungslage 4 von der als Noppenplatte ausgestalteten Hohlkammerschicht teilweise abgezogen ist, so dass die gitterartige Gewebestruktur des Polypropylengewebes der Verstärkungslage 4 erkennbar ist.

### Bezugszeichenliste:

- 1.: Hohlkammerplatte
- 2.: Decklage
- 3.: Hohlkammerschicht
- 4.: Verstärkungslage
- 5.: Gestrichelte Linie

## Patentansprüche

1. Hohlkammerplatte (1),
mit einer ersten äußeren Decklage (2),
und einer zweiten äußeren Decklage (2),
und einer zwischen den beiden Decklagen (2) angeordneten Hohlkammerschicht (3),
**dadurch gekennzeichnet,**
**dass** zwischen der Hohlkammerschicht (3) und einer Decklage (2) eine Verstärkungslage (4) angeordnet ist, die eine Gitter- oder Faserstruktur aufweist und ebenfalls Hohlräume enthält.

2. Hohlkammerplatte nach Anspruch 1,
**dadurch gekennzeichnet,**
**dass** die beiden Decklagen (2) und die Hohlkammerschicht (3) aus Kunststoff bestehen.

3. Hohlkammerplatte nach Anspruch 1 oder 2,
**dadurch gekennzeichnet,**
**dass** die Verstärkungslage (4) aus Kunststoff besteht.

4. Hohlkammerplatte nach Anspruch 3,
**dadurch gekennzeichnet,**
**dass** die Hohlkammerschicht (3) als tiefgezogene Noppenfolie ausgestaltet ist.

5. Hohlkammerplatte nach einem der vorhergehenden Ansprüche,
**dadurch gekennzeichnet,**
**dass** die Verstärkungslage (4) als Gewebe ausgestaltet ist.

6. Hohlkammerplatte nach Anspruch 5,
**dadurch gekennzeichnet,**
**dass** die Verstärkungslage (4) als Polypropylengewebe ausgestaltet ist.

7. Hohlkammerplatte nach einem der vorhergehenden Ansprüche,
**dadurch gekennzeichnet,**
**dass** zwischen den beiden Decklagen (2) mehrere Verstärkungslagen (4) angeordnet sind, von denen wenigstens eine Verstärkungslage (4) eine Gitter- oder Faserstruktur aufweist und Hohlräume enthält.

8. Hohlkammerplatte nach Anspruch 7,
**dadurch gekennzeichnet,**
**dass** zwischen der Hohlkammerschicht (3) und einer Decklage (2) mehrere Verstärkungslagen (4) angeordnet sind, von denen wenigstens eine Verstärkungslage (4) eine Gitter- oder Faserstruktur aufweist und Hohlräume enthält.
